## Europäisches Patentamt
## European Patent Office
## Office européen des brevets

(11) Publication number: **0 240 563**
**B1**

(12) **EUROPEAN PATENT SPECIFICATION**

(45) Date of publication of patent specification: **09.05.90**

(51) Int. Cl.⁵: **B 32 B 27/08, C 08 L 77/00**

(21) Application number: **86906540.9**

(22) Date of filing: **02.10.86**

(86) International application number:
**PCT/US86/02065**

(87) International publication number:
**WO 87/01990 09.04.87 Gazette 87/08**

(54) HIGH TEMPERATURE SLIP AGENT FOR POLYOLEFIN FILM.

(30) Priority: **07.10.85 US 785136**

(43) Date of publication of application:
**14.10.87 Bulletin 87/42**

(45) Publication of the grant of the patent:
**09.05.90 Bulletin 90/19**

(84) Designated Contracting States:
**BE CH DE FR GB LI SE**

(56) References cited:
**DE-A-2 106 187**
**DE-A-3 236 429**
**DE-B-2 656 932**
**US-A-3 136 735**
**US-A-3 330 796**

(73) Proprietor: **BAXTER INTERNATIONAL INC. (a Delaware corporation)**
**One Baxter Parkway**
**Deerfield Illinois 60015 (US)**

(72) Inventor: **KERSTEN, Jean**
**259, chaussée de Tournai**
**B-7931 Villers St. Amand (BE)**
Inventor: **LECOMTE, Léon**
**22, rue des Chapelles**
**B-5840 Rhimes (BE)**

(74) Representative: **MacGregor, Gordon et al**
**ERIC POTTER & CLARKSON 14 Oxford Street**
**Nottingham, NG1 5BP (GB)**

Courier Press, Leamington Spa, England.

**Description**

The present invention relates to an overpouch made from a polyolefin film.

Flexible polyolefin films are used to create a variety of bags and containers. Typically, polyolefin films are created into bags or containers in processing machines. An example of such a processing machine is a form, fill and seal packaging machine. The form, fill and seal packaging machine is utilized to create, from a web of film, a flexible plastic container that houses a product.

Because the film must travel through a processing machine it is important that the film exhibits a sufficiently low coefficient of friction to minimize drag and film marking. It is also important that the coefficient of friction is sufficiently low to ease the filling of the flexible containers with solids in, for example, a form, fill and seal packaging machine.

The coefficient of friction may be especially important at elevated temperatures. The coefficient of friction of most materials increases as the temperature of the material is elevated and the material begins to soften. In such industries as the medical and food industry the products and flexible containers typically must be sterilized. During the sterilization process the web of film often approaches its softening point. This can be an especially critical problem when one container is contained within another container, i.e., "overpouched." For example, in the medical industry parenteral products are overpouched within a second container. If the primary container has a softening point which is lower than the overpouch, during the sterilization process the primary container will grab the film of the overpouch. This will cause wrinkling in the containers. Moreover, unless the coefficient of friction is sufficiently low it will be difficult to overpouch the primary package and/or remove the primary package from the overpouch.

Heretofore, typically the slip additives for polyolefin films were amides of fatty acids. Examples of such amides of fatty acids are erucamide and ethylene bis-steramide. These slip additives have generally been effective at room temperatures. However, when the polyolefin within which these additives are contained are heated to typical sterilization temperatures of approximately 120°C their slip properties are not adequate. Even in those films in which the slip properties are generally effective, there is a problem with the clarity of the film because of the slip additives. In the medical industry, for example, clarity is an essential characteristic.

DE—A—2106187 discloses a polyolefin having a polyamide additive to facilitate extrusion, provide homogeneous colouring and provide a matt, paperlike surface.

The present invention provides an overpouch made from a clear film of polyolefin, characterised in that the polyolefin is blended with a polyamide in an amount of 1 to 4 percent by weight of the blend, the refractive index of the polyamide is within about 0.07 of the refractive index of the polyolefin, the melt flow index of the polyamide is not more than about 50% different from the melt flow index of the polyolefin, and the polyamide and polyolefin are immiscible to an extent that the polyamide migrates to the outer surface of the resultant film, whereby the film is clear with good surface slip properties.

Accordingly, it is an advantage of the present invention to provide an overpouch made of a polyolefin film having a high temperature efficient slip agent that does not change the clarity of the film, provides low slip properties at elevated temperatures, has low cost and low stain-out.

The polyolefin film may be processed on form, fill and seal equipment to make the overpouch, drag on the film and film marking when the film is processed being minimised.

The overpouch minimizes wrinkles when a primary package is packaged in the overpouch and the combined unti is sterilized.

The overpouch maintains a low coefficient of friction at temperatures of approximately 120°C. The polyamide is sufficiently compatible with the base polyolefin so that the resultant overpouch does not have poor optics, maldispersion, gels, or fish-eyes.

The overpouch provides for the easy removal of a primary container from the overpouch.

**Brief Description of the Drawings**

Fig. 1 illustrates a graph of the melt flow index of a representative polyolefin and some polyamides versus temperature.

Fig. 2 illustrates a cross-sectional view of the web of film for the overpouch of the present invention.

Fig. 3 illustrates an overpouch of the present invention.

**Detailed Description of the Presently Preferred Embodiments**

The present invention provides a high temperature efficient slip agent for polyolefin films. Moreover, the present invention provides a polyolefin film with good slip characteristics even at elevated temperatures. It has been found that by blending a polyamide with a polyolefin a flexible film can be created that has a low coefficient of friction.

The polyolefin and polyamide must be chosen so that the polyolefin and polyamide are not miscible. Accordingly, a two phase system is created after the polyamide and polyolefin are blended causing the polyamide to migrate to the outer surface of the resultant film.

However, the polyolefin and polyamide must have a sufficient degree of compatibility in order to ensure that the film created has sufficient clarity. If the polyamide and polyolefin are not sufficiently compatible, the resultant film could have poor clarity, haze, maldispersion, gels, or fish-eyes.

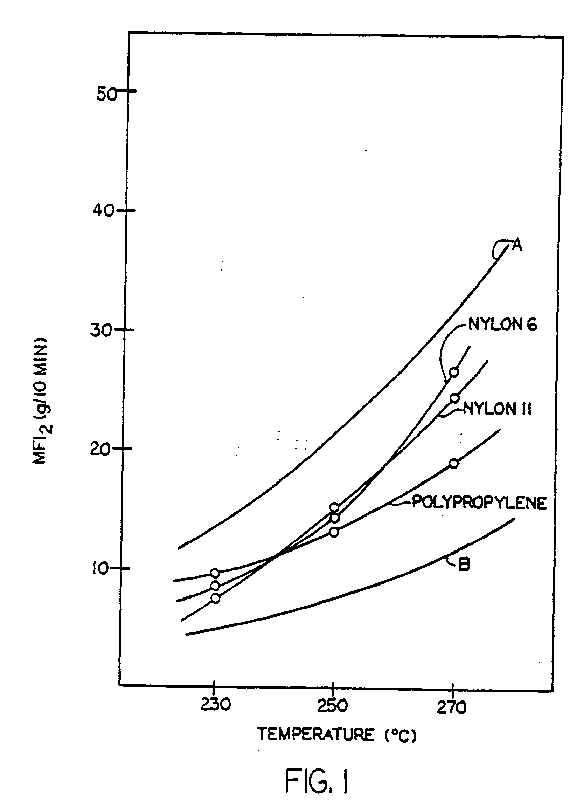

Preferably, the polyolefin and polyamide should have a similar melt viscosity through the extrusion temperature range, i.e., from the hopper zone to the nozzle. Figure 1 illustrates a graph of the melt flow index (MFI) of a representative polyolefin and two polyamides versus temperature. The polyolefin is a polypropylene. The polyamides are nylon 11 and nylon 6. As illustrated, the most acceptable MFI/ temperature curves are located between curves A and B. The temperatures graphed are the typical temperatures one finds over the extrusion process utilizing a polyolefin. The polyamides with a MFI/ temperature curve close to the polyolefin to be used, are preferred. Conversely, polyamides with a MFI differing by more than approximately 50% with respect to the polyolefin to be used are generally too incompatible.

Moreover, preferably the difference in the refractive index of the chosen polyamide and polyolefin is low and should not exceed approximately 0.07. If the difference in refractive index is increased it will impact on the clarity of the film created.

## T A B L E   I

### REFRACTIVE INDEX AND PROCESSING TEMPERATURES FOR REPRESENTATIVE POLYAMIDES AND POLYOLEFINS

| MATERIALS | REFRACTIVE INDEX 20 | MELTING RANGE (°C) | USUAL PROCESSING TEMPERATURE (°C) |
|---|---|---|---|
| Low Density Poly- ethylene | 1.51 | 105 - 125 | 190 - 250 |
| High Density Poly- ethylene | 1.54 | 125 - 135 | 200 - 280 |
| Polypropylene | 1.49 | 165 - 170 | 200 - 280 |
| Nylon 6 | 1.54 | 218 - 221 | 225 - 280 |
| Nylon 6,6 | 1.53 | 255 - 265 | 260 - 290 |
| Nylon 11 | 1.54 | 184 - 189 | 190 - 250 |
| Nylon 12 | 1.55 | 175 - 178 | 190 - 250 |

Table I, above, indicates the refractive index of some representative polyamides and representative polyolefins. As indicated, the difference in the refractive index of the polyamides listed: nylon 6, nylon 6,6, nylon 11, and nylon 12 versus the polyolefins listed: low density polyethylene; high density polyethylene; and polypropylene are all within the acceptable range, i.e., 0.07. The refractive index of polyamide and polyolefin is determined by ASTM test No. D—542.

Preferably, the polyamide slip agent is nylon 6, nylon 6,6, nylon 11, or nylon 12. It has been found that nylon 6 and nylon 6,6 function satisfactorily and are preferred for cost reasons. If water absorption is a key factor however, nylon 11 and nylon 12 are preferable. Because nylon 6,6 has a higher melting point than the other polyamides, and accordingly requires higher processing temperatures, nylon 6,6 is not recommended when the base polyolefin is susceptible to thermal degradation.

The base polyolefin for the film is preferably chosen from the group comprising, polyethylene or polypropylene. The polyethylene may be high density, medium density, or low density polyethylene. The polypropylene may be cast or oriented, as well as exhibiting low or medium crystallinity. Polypropylene has been found to function satisfactorily as the base film if the resultant film is to be used to create an overpouch.

Preferably, 96 to 99 weight percent of the base polyolefin is blended with 1 to 4 weight percent of polyamide to create the resultant film. The polyolefin and polyamide resins can be blended by dry tumbling. Through dry tumbling, polyolefin pellets and polyamide pellets are mixed in a tumbler or blender. This will mix the polyolefin and polyamide on a macroscopic level. The blend can then be extruded and accordingly mixed on a microscopic level by the extrusion process.

3

The polyolefin and polyamide can also be mixed by the use of a predispersed master batch. The master batch can comprise, for example, 50% polyamide and 50% polyolefin. It should be noted that the master batch can comprise the base polyolefin or any other polyolefin provided the compatibility requirements are met.

## T A B L E   II

### FRICTION PROPERTIES OF OVERPOUCH VERSUS HIGH DENSITY POLYETHYLENE CONTAINERS

| | FRICTION COEFFICIENTS | | | |
| | 25 $\pm$ 1°C | | 100 $\pm$ 1°C | |
| OVERPOUCH DESCRIP. | DYNAMIC | STATIC | DYNAMIC | STATIC |
| --- | --- | --- | --- | --- |
| Polypropylene film with no polyamide | 0.25 $\pm$ 0.03 | 0.35 $\pm$ 0.03 | 0.72 $\pm$ 0.24 | 1.7 $\pm$ 0.2 |
| 98% Polypropylene 2% Nylon 6 | 0.23 $\pm$ 0.02 | 0.30 $\pm$ 0.03 | 0.21 $\pm$ 0.04 | 0.26 $\pm$ 0.03 |
| 98% Polypropylene 2% Nylon 11 | 0.20 $\pm$ 0.02 | 0.27 $\pm$ 0.03 | 0.21 $\pm$ 0.02 | 0.27 $\pm$ 0.03 |
| 96% Polypropylene 4% Nylon 11 | 0.18 $\pm$ 0.02 | 0.25 $\pm$ 0.02 | 0.21 $\pm$ 0.02 | 0.25 $\pm$ 0.03 |
| 96% Polypropylene 4% Nylon 11 | 0.18 $\pm$ 0.02 | 0.28 $\pm$ 0.02 | 0.21 $\pm$ 0.02 | 0.25 $\pm$ 0.03 |

Table II, above, demonstrates the efficiency of resultant polyamide/polyolefin films at elevated temperatures. The coefficient of friction of the resultant films were measured versus a high density polyethylene film. The high density polyethylene film container functioned to represent a container the resultant film overpouched. The coefficient of friction was measured by ASTM Test No. D—1894. As can be seen, at temperatures of 100°C the polypropylene film without a polyamide slip agent has a much higher coefficient of friction than the polypropylene/polyamide films.

If the web of film is to be utilized to create an overpouch for a flexible container that must be terminally sterilized, for example in the medical industry, the overpouch and flexible container will be heated to a temperature of approximately 120°C. At this temperature the polyolefins that comprise the films of the overpouch and flexible container will begin to soften and accordingly, as illustrated in Table II, the coefficient of friction will be increased. However, due to the polyamide, the coefficient of friction of the film will remain low. Accordingly, the polyamide provides a high temperature efficient slip additive.

## T A B L E   III

SLIP PROPERTIES OF POLYOLEFIN/POLYAMIDE OVERPOUCH
FOR FLEXIBLE POLYOLEFIN CONTAINERS

| MATERIAL | TEMPERATURE | | | | | WRINKLES ON CONTAINER RATING* |
|---|---|---|---|---|---|---|
| | 25°C | 60°C | 75°C | 90°C | 100°C | |
| Rubber Modified High Density Polyethylene | 81 | 49 | 53 | 61 | 66 | 1 |
| Polypropylene 85 μm | 51 | 100 | 82 | N/A | N/A | 8 |
| Polypropylene 50 μm | 63 | 120 | N/A | N/A | N/A | 10 |
| 40 μm Polypropylene and 0.5% Erucamide | 59 | 50 | 55 | 60 | N/A | 3 |
| 50 μm Polypropylene and 0.5% Erucamide | 70 | 62 | 56 | 70 | N/A | 3 |
| 96% Polypropylene and 4% Nylon 11 | 38 | 56 | 52 | 45 | 42 | 1 |
| 96% Polypropylene and 4% Nylon 11 | 40 | 58 | 54 | 45 | 43 | 1 |

RATING:  0 = PERFECT   10 = BAD

N/A = beyond the range of the test equipment

Units for slip properties = newtons

Table III, above, illustrates the slip properties of the polyolefin films blended with polyamides at various temperatures. As one can see, the films with the polyamide additive maintain a low coefficient of friction, at the various temperatures, while the films without the polyamide slip agent do not. Moreover, the film with the polyamides that create the overpouches, produce packages that have an overall lower wrinkle on container rating.

By way of example, and not limitation, an example of a film is as follows:

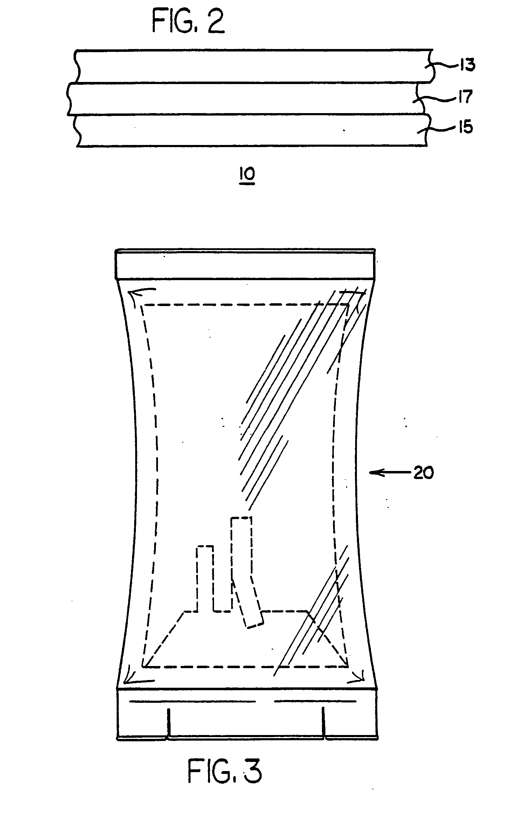

As illustrated in Figure 2, the film 10 is a coextrusion including two outer layers 13 and 15, and a core layer 17. The core layer 17 is constructed from a medium crystallinity polypropylene. The outer layers 13 and 15 comprise 2 to 4% by weight nylon 11 blended with 98 to 96% by weight medium crystallinity polypropylene.

In the example given, the film 10 is to be utilized to create an overpouch. Preferably, the outer layers 13 and 15 each have a thickness of approximately 15 μm and the core layer 17 preferably has a thickness of approximately 60 μm. Figure 3 illustrates an overpouch 20 created from the film of the present invention.

The medium crystallinity polypropylene can be either a single polypropylene grade with medium crystallinity or a blend of high and low crystallinity polypropylenes. Using a medium crystallinity polypropylene results in a film with a good balance of mechanical properties, optics, and sealability. The film structure is symmetrical and therefore can be sealed on both outer layers 3 and 5. Accordingly both a "fin seal" (inside surface to inside surface) and a "lap seal" (inside surface to outside surface) can be achieved.

## Claims

1. An overpouch made from a clear film of polyolefin, characterised in that the polyolefin is blended with a polyamide in an amount of 1 to 4 percent by weight of the blend, the refractive index of the polyamide is within about 0.07 of the refractive index of the polyolefin, the melt flow index of the polyamide is not more than about 50% different from the melt flow index of the polyolefin, and the polyamide and polyolefin are immiscible to an extent that the polyamide migrates to the outer surface of the resultant film, whereby the film is clear with good surface slip properties.

2. The overpouch of Claim 1 wherein the polyamide comprises approximately 2 to 4 weight percent of the blend.

3. The overpouch of Claim 1 or 2 wherein the polyamide is chosen from nylon 6, nylon 6,6, nylon 11 and nylon 12.

4. The overpouch of Claim 1, 2 or 3 wherein the polyolefin is high density polyethylene, medium density polyethylene, low density polyethylene, or polypropylene.

5. The overpouch of any preceding Claim including two outer layers made of said polyolefin film and a core layer.

6. The overpouch of Claim 5 wherein the core layer is made from a polyolefin film.

## Patentansprüche

1. Überbeutel aus einem klaren Polyolefinfilm, dadurch gekennzeichnet, daß das Polyolefin mit einen Polyamid in einer Menge von 1—4 Gew.-% der Mischung vermischt ist, die Brechzahl des Polyamids innerhalb ca. 0,07 der Brechzahl des Polyolefins liegt, der Schmelzflußindex des Polyamids um nicht mehr als ca. 50% vom Schmelzflußindex des Polyolefins verschieden ist, und das Polyamid und Polyolefin in einem solchen Ausmaß nichtmischbar sind, daß das Polyamid zur Außenfläche des resultierenden Films wandert, so daß der Film klar ist und gute Oberflächengleiteigenschaften hat.

2. Überbeutel nach Anspruch 1, wobei das Polyamid ca. 2—4 Gew.-% der Mischung umfaßt.

3. Überbeutel nach Anspruch 1 oder 2, wobei das Polyamid Nylon 6, Nylon 6,6, Nylon 11 oder Nylon 12 ist.

4. Überbeutel nach Anspruch 1, 2 oder 3, wobei das Polyolefin Polyethylen hoher Dichte, Polyethylen mittlerer Dichte, Polyethylen niedriger Dichte oder Polypropylen ist.

5. Überbeutel nach einem der vorhergehenden Ansprüche, umfassend zwei Außenschichten aus dem Polyolefinfilm und eine Kernschicht.

6. Überbeutel nach Anspruch 5, wobei die Kernschicht aus einem Polyolefinfilm besteht.

## Revendications

1. Sursachage formé d'un film transparent de polyoléfine, caractérisé en ce que la polyéfine est mélangée avec un polyamide présent dans une proportion de 1 à 4% en poids du mélange, en ce que l'indice de réfraction de ce polyamide ne s'écarte pas de celui de la polyéfine de plus de 0,07 environ, en ce que l'indice de fusion de ce polyamide ne diffère pas de l'indice de fusion de la polyoléfine de plus de 50% environ et en ce que le polyamide et la polyoléfine sont suffisamment immiscibles pour que le polyamide soit l'objet d'une migration vers la surface extérieure du film résultant, de sorte que ce film est transparent et offre de bonnes propriétés de glissement superficiel.

2. Sursachage suivant la revendication 1, dans lequel le polyamide constitue approximativement 2 à 4% en poids du mélange.

3. Sursachage suivant la revendication 1 ou 2, dans lequel le polyamide est choisi parmi le Nylon 6, le Nylon 66, le Nylon 11 et le Nylon 12.

4. Sursachage suivant l'une des revendications 1 à 3, dans lequel la polyoléfine est un polyéthylène haute densité, un polyéthylène moyenne densité, un polyéthylène basse densité ou du polypropylène.

5. Sursachage suivant l'une quelconque des revendications précédentes, comportant deux couches extéreures formées dudit film de polyoléfine et une couche centrale.

6. Sursachage suivant la revendication 5, dans lequel la couche centrale est formée d'un film de polyoléfine.

FIG. I

## FIG. 2

13

17

15

10

20

## FIG. 3